# EUROPEAN PATENT SPECIFICATION

(11) **EP 2 690 190 B1**
(45) Date of publication and mention of the grant of the patent: **27.09.2017**
(21) Application number: 12765227.9
(22) Date of filing: 26.03.2012
(51) Int. Cl.: C22C 38/00, C22C 38/58, C22C 38/02, C22C 38/04, C22C 38/06, C22C 38/34, C22C 38/40, C21D 6/00, C21D 6/02, C21D 8/12

(54) **AUSTENITIC STAINLESS STEEL**
AUSTENITISCHER EDELSTAHL
ACIER INOXYDABLE AUSTÉNITIQUE

(30) Priority: 25.03.2011 JP 2011068858
(43) Date of publication of application: 29.01.2014
(73) Proprietor: Nisshin Steel Co., Ltd., Chiyoda-ku, Tokyo 100-8366 (JP)
(72) Inventor: KATSUKI Junichi, Shunan-shi Yamaguchi 746-0023 (JP)
(74) Representative: Ablett, Graham Keith
(86) International application number: PCT/JP2012/057728
(87) International publication number: WO 2012/133291

(56) References cited:
- EP-A1- 1 221 494
- JP-A- 4 143 255
- JP-A- 8 060 308
- JP-A- 9 137 255
- JP-A- H0 361 322
- JP-A- H04 263 049
- JP-A- H06 346 194
- JP-A- H08 104 915
- JP-A- H11 106 873
- JP-A- 2007 277 727
- JP-A- 2008 114 288
- US-A- 5 651 937
- US-A- 6 123 784
- US-B1- 6 379 477
- US-B1- 6 440 579
- US-B1- 6 459 195

## Description

### TECHNICAL FIELD

The present invention relates to austenitic stainless steel plate capable of reducing surface defects and having excellent surface glossiness.

### BACKGROUND ART

Stainless steel is a material that has excellent corrosion resistance and durability, and also possesses good mechanical properties. Stainless steel has been applied across a broad range of fields such as home equipment and electrical and electronic device components as amember of which the appearance and design are considered to be important, and in particular, austenitic stainless steel is often used when surface glossiness is considered to be important.

In such a case, the stainless steel is used as a mirror plate obtained by performing bright annealing for a cold-rolled steel plate, followed by buffing; however, during buffing, surface defects such as fine scratches and stains may occur on the surface of the steel plate in some materials. The occurrence of such surface defects leads to a loss of the product value.

As a method of manufacturing the mirror plate, in PTL 1, the total Al content in the molten raw material is set to 0.020 kg or less per one ton of crude molten steel and the Si content in molten steel after the completion of reducing refining is set to 0.40% or more so as to control the generation of an Al₂O₃-based inclusion.

Furthermore, in PTL 2, Al-containingmaterial is not added until the casting step, the Al content in the molten steel is controlled at 0.0050% or less, and the slag and composition at the time of completion of reducing refining are set to 1.0 ≤ (%CaO)/(%SiO₂) ≤ 1.5, (%Al₂O₃) ≤ 10%, and (%MgO) ≤ 10%.

### CITATION LIST

### Patent Literature

PTL 1: Japanese Laid-Open Patent Publication No. 4-99215
PTL 2: Japanese Laid-Open Patent PublicationNo. 8-104915

US 5,651,937 discloses austenitic stainless steel for the production of wire, which can be used in the field of drawing to a diameter of less than 0.3 mm and in the field of producing parts subjected to wear.

US 6,123,784 also discloses austenitic stainless steel for the production of wire, which can be used in the field of drawing to a diameter of less than 0.3 mm and in the field of producing parts subjected to wear, in which the residual elements are controlled so as to obtain inclusions of oxides in the form of a glassy mixture.

US 6, 440, 579 discloses a process for producing a drawn wire, in particular a wire for reinforcing tyres, having a diameter of less than 0.3 mm by drawing a base wire rod having a diameter of greater than mm or a predrawn base sire made of steel having a specific composition, in which the inclusions of oxides have the form of a glassy mixture.

JP 2007 277727 discloses stainless steel having corrosion resistance, weldability, and surface properties having a specific composition, in which nonmetallic inclusions in the stainless steel are formed into CaO-SiO₂-Al₂O₃-MgO-MnO based oxides.

JP 2008 114288 discloses a method for producing a stainless steel sheet which comprises applying hot rolling or hot and cold rolling to a steel slab having a specific elemental composition, wherein a part of the cross section obtained by cutting the steel sheet after the rolling at a right angle or at an almost right angle to the rolling direction is used as an inspection standard area and subjected to microscope observation.

JP 03 61322 discloses a method for producing an austenitic stainless steel having improved drawability, to prevent the occurrence of breaking of wire and fracture at the time of working by means of cold working by subjecting a hot rolling stock composed of austenitic stainless steel with a specific composition to heating and hot rolling under specific conditions and forming contained nonmetallic inclusions into stretchable inclusions with a specific composition.US 6,379,477 and US 6,459,195 disclose Fe-Cr-Ni alloys for electron gun electrodes having specified elemental compositions, which when rolled into sheets having a thickness of 0.1 to 0.7 mm, the surface portion of which includes groups of lining inclusions having specified widths.

EP 1221494 discloses an austenitic stainless steel which is less crack-sensitive during formation, having a specified elemental composition. During steel making, molten steel is covered with basic slag and deoxidized with an Si alloy under vacuum or in a non-oxidizing atmosphere.

JP 04 263049 discloses a stainless steel for ultrahigh vacuum equipment having improved gas evolving characteristics, having a specified elemental composition.

### SUMMARY OF INVENTION

### Technical Problem

However, the method according to PTL 1 prevents only scratches, and the method according to PTL 2 can control the size of large oxide-based inclusions up to about 10 µm along the rolling direction, but is only effective at preventing relatively large scratches that can be clearly seen visually. Such streak flaws were not sufficient to comply with the strict gloss-quality requirements of customers. In addition, preventive measures for stain-like defects were not examined, either.

The present invention has been achieved in view of the above problems, and an object thereof is to provide an austenitic stainless steel plate having excellent surface glossiness by controlling the composition of oxides and the size of sulfides, which are nonmetallic inclusions, in order to prevent scratches and stain-like defects.

### Solution to Problem

The austenitic stainless steel plate according to claim 1 contains Si from 0.2 to 2.0% by mass, Mn from 0.3 to 5.0% by mass, S present at 0.007% by mass or less, Ni from 7.0 to 15.0% by mass, Cr from 15.0 to 20.0% by mass, Al present at 0.005% by mass or less, Ca present at 0.002% by mass or less, Mg present at 0.001% by mass or less, and O from 0.002 to 0.01% by mass, wherein the remainder is Fe and unavoidable impurities, a mass ratio indicated by (Mn + Si)/Al among Mn, Si, and Al is 200 or more, wherein the composition of the oxide-based nonmetallic inclusion consists of MnO-SiO₂-Al₂O₃-CaO, and optionally Cr₂O₃ and MgO, where Al₂O₃ is 30% by mass or less, Cr₂O₃ is 5% by mass or less, MgO is 10% by mass or less, and wherein the sulfide-based nonmetallic inclusion is CaS, having a maximum area of 100 µm² or less.

### Advantageous Effects of Invention

According to the present invention, the composition of the oxide-based nonmetallic inclusion and the size of the sulfide-based nonmetallic inclusion can be controlled by restricting the composition of the stainless steel plate and by restricting the mass ratio relationship of Mn, Si, and Al, and therefore, the occurrence of scratches and stain-like defects can be prevented, and surface glossiness can be improved.

### DESCRIPTION OF EMBODIMENTS

An embodiment of the present invention will be explained in detail.

First, the cause for scratches and stain-like defects was investigated for products obtained by performing bright annealing for stainless steel plates having various plate thicknesses followed by buffing. Upon investigation, it was found that in the stainless steel plates with scratches, the components of the oxide-based nonmetallic inclusion included oxides such as Al₂O₃ at a concentration higher than 30% by mass, Cr₂O₃ at a concentration higher than 5% by mass, and MgO at a concentration higher than 10% by mass. Thus, it was understood that scratches could be prevented from occurring by setting so that the oxide-based nonmetallic inclusion consists of MnO-SiO₂-Al₂O₃-CaO, optionally Cr₂O₃ and MgO, where Al₂O₃ is 30% by mass or less, Cr₂O₃ is 5% by mass or less, and MgO is 10% by mass or less.

It was found that the cause for the stain-like defect was CaS, which was a sulfide-based nonmetallic inclusion, and when the area of one CaS was greater than 100 µm², it resulted in a stain-like defect that could be observed by visual inspection. Because the cause of occurrence of the stain-like defect is the fact that CaS is a water-soluble sulfide, due to the reaction of CaS with the moisture in the usage environment, CaS is thought to be eluted from the surface of the steel plate. It must be noted that the stain-like defect is determined based on whether or not it can be observed visually, and 100 µm² is the reference. A size of 100 µm² or less is acceptable in quality as an industrial product. Furthermore, in the usage described in the present invention, the environment was mild from the viewpoint of corrosion resistance, and no deterioration into rusting due to the progress in the stain-like defect was observed.

Hereinafter, the components included in the stainless steel according to the present invention and their content will be explained.

### [Si: 0.2 to 2.0% by mass]

Si is a component used for deoxidation of molten steel and constitutes the oxide-based nonmetallic inclusion as SiO₂. When the content of Si is less than 0.2% by mass, insufficient deoxidation occurs, the content of O in the stainless steel exceeds 0.01% by mass, and the Cr₂O₃ concentration in the oxide-based nonmetallic inclusion becomes more than 5% by mass, of which oxide, the cause for scratches, is generated. In addition, if the content of O in the steel exceeds 0.01% by mass, the S concentration in the steel increases in most cases, and a coarse sulfide-based nonmetallic inclusion is generated that causes stain-like defects. On the other hand, if the content of Si exceeds 2.0% by mass, the steel plate becomes hard, a large number of passes are required for rolling the steel plate to a predetermined thickness at the time of manufacturing a thin plate by cold working, and also an annealing step may be needed for certain plate thicknesses, thereby leading to a decline in productivity and increase in production costs. Therefore, the content of Si was set to 0.2% by mass or more and 2.0% by mass or less.

### [Mn: 0.3 to 5.0% by mass]

The same as Si, Mn is a component used for deoxidation of molten steel and constitutes the oxide-based nonmetallic inclusion as MnO. If the content of Mn is less than 0.3% by mass, it becomes difficult to generate MnO, which is an oxide component for preventing scratches. On the other hand, if the content of Mn exceeds 5.0% by mass, coarse MnS-based sulfides are generated easily when the S concentration is high. In such a case, cracks in bending may occur easily. Therefore, the content of Mn was set to 0.3% by mass or more and 5.0% by mass or less.

### [S: present at 0.007% by mass or less]

S reacts with Ca to form a sulfide-based nonmetallic inclusion. If the content of S exceeds 0.007% by mass, a large sulfide having an area of 100 µm² or more per sulfide is generated, which may cause stain-like defects to occur. Therefore, the content of S was set to be present at 0.007% by mass or less.

### [Ni: 7.0 to 15.0% by mass]

Ni is the main component of austenitic stainless steel and must be present in an amount of 7.0% by mass or more in order to secure corrosion resistance and processability. However, since Ni is a relatively expensive element, in view of the production cost, the content of Ni was set to 7.0% by mass or more and 15.0% by mass or less.

### [Cr: 15.0 to 20.0% by mass]

Cr is the main component of stainless steel and must be present in an amount of 15.0% by mass or more in order to secure corrosion resistance. On the other hand, if the content of Cr exceeds 20.0% by mass, it may cause the material to harden and the processability to deteriorate. Therefore, the content of Cr was set to 15.0% by mass or more and 20.0% by mass or less.

### [Al: present at 0.005% by mass or less]

Al has a stronger oxygen affinity than Si and Mn, and if the content exceeds 0.005% by mass, an oxide-based nonmetallic inclusion containing Al₂O₃ at more than 30% by mass, which becomes the source of occurrence of scratches, is generated. Therefore, the content of Al was set to be present at 0.005% by mass or less.

### [Ca: present at 0.002% by mass or less]

Ca is an element that greatly affects the composition of the oxide-base nonmetallic inclusion and the sulfide-based nonmetallic inclusion. Furthermore, Ca forms CaS, which is a cause of occurrence of stain-like defects. If the content of Ca exceeds 0.002% by mass, a large sulfide having a size of 100 µm² or more is generated, which may cause stain-like defects to occur. Therefore, the content of Ca was set to be present at 0.002% by mass or less.

### [Mg: present at by mass or less]

Mg has an even stronger oxygen affinity than Al, and if the content exceeds 0.001% by mass, the MgO present in the oxide-based nonmetallic inclusion becomes more than 10% by mass, resulting in scratches. Therefore, the content of Mg was set to be present at 0.001% by mass or less.

### [O: 0.002 to 0.01% by mass]

O is a constituent element of the oxide-based nonmetallic inclusion, however, if the content of O is less than 0.002% by mass, MgO, which is the primary oxide of a lining refractory used during ladle and continuous casting, is likely to be reduced, and the content of Mg may exceed the upper limit of 0.001% by mass. On the other hand, if the content of O exceeds 0.01% by mass, a Cr₂O₃-based inclusion, which is the cause for scratches, is generated. Therefore, the content of O was set to 0.002% by mass or more and 0.01% by mass or less.

### [Mass ratio of Mn, Si, and Al in the stainless steel]

The composition of the oxide-based nonmetallic inclusion that causes scratches can be controlled by restricting the relationship of the mass ratio of Mn, Si, and Al in the stainless steel. That is, as regards the mass ratio of Mn, Si, and Al, if the value of (Mn + Si) /Al is less than 200, the concentration of Al₂O₃ in the oxide increases, and an oxide-based nonmetallic inclusion, which is the cause for scratches, is generated. Therefore, as regards the relationship of the mass ratio of Mn, Si, and Al in the stainless steel, the value of (Mn + Si) /Al was set to 200 or more.

### [Components of oxide-based nonmetallic inclusion in stainless steel]

Scratches can be prevented if the oxide-based nonmetallic inclusion in the stainless steel consists of MnO-SiO₂-Al₂O₃-CaO, and optionally Cr₂O₃ and MgO, and in the oxide-based nonmetallic inclusion, Al₂O₃ is at 30% by mass or less, Cr₂O₃ is at 5% by mass or less, and MgO at 10% by mass or less. If the Al₂O₃ concentration, the Cr₂O₃ concentration, and the MgO concentration in the oxide exceed the upper limit described above, a rigid inclusion is formed, and scratches occur at the time of buffing because the inclusion is harder than the material. If the Al₂O₃ concentration, the Cr₂O₃ concentration, and the MgO concentration in the oxide are confined within the upper limit described above, the melting point of the oxide-based nonmetallic inclusion lowers, of which at the time of hot working of the ingot, a viscous deformation of the inclusion occurs at the temperature of hot working, and the inclusion is dispersed into extremely minute inclusions at the time of cold working, and as a result, scratches are no longer observed during buffing.

### [Size of one sulfide in sulfide-based nonmetallic inclusion in stainless steel]

The sulfide-based nonmetallic inclusion observed in the above austenitic stainless steel is CaS. As described above, the sulfides are water soluble of which if a sulfide is large with an area of more than 100 µm², stain-like defects, which can easily be determined visually, occur. Thus, if the area per one sulfide-based nonmetallic inclusion is controlled at 100 µm2 or less, stain-like defects cannot be determined visually, which enables practical use as a product. In order to thus control the size of the sulfide-based nonmetallic inclusion, the composition of the stainless steel must be such that S ≤ 0.007% by mass, Ca ≤ 0.002% by mass, and O ≤ 0.01% by mass. Examples

80 tons of austenitic stainless steel having each of the compositions of the charges shown in Table 1 were melted to form a slab through each of the processes of the electric furnace, converter reactor, vacuum oxygen decarburization (VOD) refining, and CC process, in that order. It must be noted that during reducing refining in VOD, while the salt temperature CaO/SiO₂ of the slag used in accordance with the charge was varied up to 1.0 to 2.5, the concentration of Mn, Si, and Al used as the desalting agents was also varied.
[Table 1]

**Table 1: Components of stainless steel of each charge that is melted in example (% by mass)**

| Charge NO. | Si | Mn | Ni | Cr | Al | S | O | Ca | Mg |
|---|---|---|---|---|---|---|---|---|---|
| A002 | 0.6 | 0.3 | 8.2 | 18.8 | 0.001 | 0.0038 | 0.0054 | 0.0020 | 0.0007 |
| A003 | 2.0 | 0.3 | 9.1 | 17.5 | 0.005 | 0.0014 | 0.0048 | 0.0018 | 0.0004 |
| A006 | 0.6 | 0.8 | 8.3 | 18.2 | 0.004 | 0.0024 | 0.0080 | 0.0016 | 0.0009 |
| A007 | 0.4 | 0.7 | 15.0 | 15.1 | 0.002 | 0.0009 | 0.0031 | 0.0015 | 0.0005 |
| B001 | 0.1 | 3.0 | 8.6 | 18.5 | 0.002 | 0.0075 | 0.0107 | 0.0018 | 0.0001 |
| B002 | 0.4 | 0.6 | 8.3 | 18.2 | 0.008 | 0.0008 | 0.0020 | 0.0025 | 0.0015 |
| B003 | 0.2 | 0.9 | 9.7 | 17.1 | 0.006 | 0.0012 | 0.0035 | 0.0014 | 0.0009 |
| B004 | 0.5 | 0.6 | 14.8 | 15.9 | 0.002 | 0.0024 | 0.0010 | 0.0025 | 0.0012 |
| B005 | 0.3 | 0.2 | 8.7 | 18.2 | 0.003 | 0.0017 | 0.0023 | 0.0012 | 0.0006 |
| B006 | 0.8 | 5.1 | 8.5 | 18.6 | 0.001 | 0.0092 | 0.0087 | 0.0006 | 0.0001 |
| B007 | 0.3 | 0.6 | 8.6 | 18.1 | 0.001 | 0.0068 | 0.0112 | 0.002 | 0.0008 |

Thereafter, each slab was subjected to hot rolling → cold rolling → acid pickling → cold rolling → bright annealing to form a cold-rolled coil of 1.0 mm thickness, and a steel plate was extracted from the coil. After performing buffing and mirror finishing for each steel plate obtained in this manner, the scratch occurrence status was investigated. To investigate the stain-like defects occurrence status, the CASS test was performed for a specimen. In the CASS test, 5% NaCl was adjusted with acetic acid to a pH value of 3, the liquid temperature was set to 50°C, and then sprayed on the specimen for 16 hours. After the completion of spraying, the occurrence status of stain-like defects was investigated.

Table 2 shows the components of each specimen, the composition of the oxide-based nonmetallic inclusion, the type and area of the sulfide-based nonmetallic inclusion, and the occurrence status of scratches and stain-like defects. The area of thesulfide-based nonmetallic inclusion was determined by photographing the sulfide with an electron microscope, and then tracing the outer periphery of the sulfide with a planimeter.
[Table2]

**Table 2. Components of each specimen, composition of the oxide-based nonmetallic inclusion, type and area of the sulfide-based nonmetallic inclusion, and occurrence status of scratch and stain-like defect.**

| Classification | Sample No. | Si (%) | Mn (%) | Al (%) | Ratio of (Mn+Si) /Al | S (%) | O (%) | Ratio Ca (%) | Mg (%) | Components Of Oxide-based nonmetallic inclusion | Concentration of each oxide in oxide-based nonmetallic inclusion | | | Type of sulfide-based nonmetallic inclusion | Max. area of CaS (µm /piece) | Presence of scratch | Presence of stain-like defect |
|---|---|---|---|---|---|---|---|---|---|---|---|---|---|---|---|---|---|
| | | | | | | | | | | | Al₂O₃ | Cr₂O₃ | MgO | | | | |
| Present Example | | | | | | | | | | | | | | CaS | | | |
| | A002 | 0.6 | 0.3 | 0.001 | 900 | 0.0038 | 0.0054 | 0.0020 | 0.0007 | MnO-SiO₂-Al₂-O₃-CaO-MgO | 15.6 | <0.1 | 3.8 | | 53 | No | No |
| | A003 | 2.0 | 0.3 | 0.005 | 200 | 0.0014 | 0.0048 | 0.0018 | 0.0004 | MnO-SiO₂-Al₂O₃-CaO-MgO | 29.1 | 0.2 | 0.8 | | 23 | No | No |
| | | | | | | | | | | | | | | | | | |
| | | | | | | | | | | | | | | | | | |
| | A006 | 0.6 | 0.8 | 0.004 | 433 | 0.0024 | 0.0080 | 0.0016 | 0.0009 | MnO-SiO₂-Al₂O₃-CaO-Cr₂O₃-MgO | 18.7 | 3.9 | 5.9 | | 85 | No | No |
| | A007 | 0.4 | 0.7 | 0.002 | 550 | 0.0009 | 0.0031 | 0.0015 | 0.0005 | MnO-SiO₂-Al₂O₃-CaO-MgO-Cr₂O₃ | 9.4 | 0.3 | 1.3 | | 35 | No | No |
| Comparative example | B001 | 0.1 | 3.0 | 0.002 | 1550 | 0.0075 | 0.0107 | 0.0018 | 0.0001 | MnO-Cr₂O₃ | <0.1 | 5.5 | <0.1 | MnS | Not observed | Yes | *2 |
| | B002 | 0.4 | 0.6 | 0.008 | 125 | 0.0008 | 0.0020 | 0.0025 | 0.0015 | Al₂O₃-MgO-CaO | 68.6 | <0.1 | 24.7 | CaS | 252 | Yes | Yes |
| | B003 | 0.2 | 0.9 | 0.006 | 183 | 0.0012 | 0.0035 | 0.0014 | 0.0009 | Al₂O₃-MgO | 69.7 | <0.1 | 30.2 | CaS | 32 | Yes | No |
| | B004 | 0.5 | 0.6 | 0.002 | 550 | 0.0024 | 0.0010 | 0.0025 | 0.0012 | Al₂O₃-MgO | 67.2 | <0.1 | 31.8 | CaS | 125 | Yes | Yes |
| | B005 | 0.3 | 0.2 | 0.003 | 167 | 0.0017 | 0.0023 | 0.0012 | 0.0006 | Al₂O₃-MgO | 68.8 | <0.1 | 30.9 | CaS | 38 | Yes | No |
| | B006 | 0.8 | 5.1 | 0.001 | 4300 | 0.0092 | 0.0087 | 0.0006 | 0.0001 | MnO-SiO₂-Al₂O₃-Cr₂O₃ | 10.4 | 4.1 | <0.1 | MnS | Not observed | No | *2 |
| | B007 | 0.3 | 0.6 | 0.001 | 900 | 0.0068 | 0.0112 | 0.0020 | 0.0008 | MnO-SiO₂-Cr₂O₃ | <0.1 | 8.4 | <0.1 | MnS | | Yes | *2 |

| | | | | | | | | | | | | | | | | | |
|---|---|---|---|---|---|---|---|---|---|---|---|---|---|---|---|---|---|
| *1 The underlined components in the comparative examples indicate concentrations out of the conditions of the present invention *2 As regards comparative examples B001, B006, and B007, at the time of bending, long linear MnS-based sulfides existed in the bent ridgeline, and therefore, a flex crack occurred. | | | | | | | | | | | | | | | | | |

The oxide-based nonmetallic inclusion observed in sample No. A002, A003, A006, and A007, which constitutes the present example according to the present invention, was a MnO-SiO₂-Al₂O₃-CaO-MgO system, with the Al₂O₃concentration in the oxide at 30% by mass or less, the Cr₂O₃ concentration at 5% by mass or less, and the MgO concentration at 10% by mass or less, and no scratches were observed on the surface of the steel plate. Furthermore, the maximum size of CaS observed as the sulfide-based nonmetallic inclusion was 100 µm² or less, and a stain-like defect was not observed.

On the other hand, in sample No. B001, which constitutes the comparative example, the Si concentration was low which led to insufficient deoxidation, the O concentration in the steel was 0.0107% by mass, which is outside the specified range, and in addition, desulfurization was insufficient and the S concentration was 0.0075% by mass. As a result, a rigid MnO-Cr₂O₃ was generated as the oxide-based nonmetallic inclusion, and the inclusion was the cause for scratches.

In sample No. B002, the Al concentration was high at 0.008% by mass, the value of (Mn + Si)/Al was less than 200, and the Mg concentration was high at 0.0015% by mass. As for the oxide-based nonmetallic inclusion, a rigid Al₂O₃-MgO based inclusion was observed, and scratches were seen on the surface of the steel plate. In addition, the Ca concentration was 0. 0025% by mass, which exceeded the specified range, and therefore, CaS having an area in excess of 100 µm² was generated, and a stain-like defect was also observed.

In sample No. B003, the Al concentration was 0.006% by mass, and therefore, an Al₂O₃-MgO based inclusion was observed. A scratch was observed on the surface of the steel plate.

In sample No. B004, although the Al concentration in the steel satisfied the specified conditions, the O concentration in the steel was low and the oxygen potential in the molten steel was also low, of which a reduction reaction (MgO = Mg + O) of the MgO included at approximately 40% by mass in the refractory was promoted, the Mg picked up in the molten steel and Mg concentration exceeded the specified range to become 0.0012% by mass. Therefore, an Al₂O₃-MgO based inclusion was generated, and a scratch and a stain-like defect were seen.

In sample No. B005, Mn was low at 0.2% by mass, the value of (Mn + Si) /Al was less than 200, an Al₂O₃-MgO based inclusion was generated, and a scratch was observed.

In sample No. B006, the Mn concentration was 5.1% by mass and exceeded the specified range, and also, the S concentration was high at 0.0092% by mass. Therefore, a MnS-based sulfide was generated, and a crack in bending occurred.

In sample No. B007, the O concentration was 0.0112% by mass which led to insufficient deoxidation, and as a result, the Cr₂O₃ concentration in the oxide-based nonmetallic inclusion exceeded 5.0% by mass, and a rigid inclusion was generated. A scratch occurred as a result.

### INDUSTRIAL APPLICABILITY

The present invention, for example, is employed as austenitic stainless steel plate for use in home equipment and electrical and electronic device components where surface glossiness is considered important.

## Claims

1. An austenitic stainless steel plate, comprising:
Si from 0.2 to 2.0% by mass, Mn from 0.3 to 5.0% by mass, S present at 0.007% by mass or less, Ni from 7.0 to 15.0% by mass, Cr from 15.0 to 20.0% by mass, Al present at 0.005% by mass or less, Ca present at 0.002% by mass or less, Mg present at 0.001% by mass or less, and O from 0.002 to 0.01% by mass, wherein the remainder is Fe and
unavoidable impurities, and a mass ratio indicated by (Mn + Si)/Al among Mn, Si, and Al is 200 or more, wherein the composition of the oxide-based nonmetallic inclusion consists of MnO-SiO₂-Al₂O₃-CaO, and optionally Cr₂O₃ and MgO, where Al₂O₃ is 30% by mass or less, Cr₂O₃ is 5% by mass or less, and MgO is 10% by mass or less; and wherein the sulfide-based nonmetallic inclusion is CaS, having a maximum area of 100 µm² or less.

## Patentansprüche

1. Eine austenitische Edelstahlplatte, die Folgendes aufweist:
Si von 0,2 bis 2,0 Gew.%, Mn von 0,3 bis 5,0 Gew.-%, g vorhanden mit 0,007 Gew.-% oder weniger, Ni von 7,0 bis 15,0 Gew.-%, Cr von 15,0 bis 20,0 Gew.%, Al vorhanden mit 0,005 Gew.% oder weniger,
Ca vorhanden mit 0,002 Gew.-% oder weniger,
Mg vorhanden mit 0,001 Gew.-% oder weniger,
und O von 0,002 bis 0,01 Gew.%,
wobei der Rest aus Fe und unvermeidlichen Unreinheiten besteht und ein Massenverhältnis, angegeben mit (Mn + Si) /Al durch Mn, Si und Al, von 200 oder mehr hat,
wobei die Zusammensetzung der oxidbasierten nichtmetallischen Inklusion aus MnO-SiO₂-Al₂O₃-CaO besteht, und optional Cr₂O₃ und MgO, wobei Al₂O₃ 30 Gew.-% oder weniger, Cr₂O₃ 5 Gew.-% oder weniger und MgO 10 Gew.-% oder weniger hat; und
wobei die sulfidbasierte nichtmetallische Inklusion CaS mit einem maximalen Bereich von 100 µm² oder weniger ist.

## Revendications

1. Plaque d'acier inoxydable austénitique, comprenant :
Si de 0,2 à 2,0 % en masse, Mn de 0,3 à 5,0 % en masse, S présent à 0,007 % en masse ou moins, Ni de 7,0 à 15,0 % en masse, Cr de 15,0 à 20,0 % en masse, Al présent à 0,005 % en masse ou moins,
Ca présent à 0,002 % en masse ou moins,
Mg présent à 0,001 % en masse ou moins,
et O de 0,002 à 0,01 % en masse,
dans laquelle le restant est Fe et les inévitables impuretés et un ratio de masse indiqué par (Mn + Si) /Al parmi Mn, Si et Al est de 200 ou plus,
dans laquelle la composition de l'inclusion non métallique à base d'oxyde se compose de MnO-SiO₂-Al₂O₃-CaO et éventuellement de Cr₂O₃ et de MgO, où Al₂O₃ est de 30 % en masse ou moins, Cr₂O₃ est de 5 % en masse ou moins et MgO est de 10 % en poids ou moins ; et
dans laquelle l'inclusion non métallique à base de sulfure est CaS, présentant une surface maximale de 100 µm² ou moins.
